(19) Europäisches Patentamt
European Patent Office
Office européen des brevets

(11) **EP 3 439 227 A1**

(12) **EUROPÄISCHE PATENTANMELDUNG**

(43) Veröffentlichungstag:
**06.02.2019   Patentblatt 2019/06**

(51) Int Cl.:
***H04L 9/06*** (2006.01)

(21) Anmeldenummer: **17184167.9**

(22) Anmeldetag: **01.08.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft
80333 München (DE)**

(72) Erfinder:
• **Cuellar, Jorge
82065 Baierbrunn (DE)**
• **Gasiba, Tiago
81549 München (DE)**

Bemerkungen:
Geänderte Patentansprüche gemäss Regel 137(2) EPÜ.

(54) **SICHERE KOMMUNIKATION ÜBER MEHRERE KOMMUNIKATIONSKANÄLE OHNE SCHLÜSSELAUSTAUSCH**

(57)   Die Erfindung betrifft ein Verfahren zum Versenden eines binären Klartexts T, wobei das Verfahren folgende Schritte umfasst Bereitstellen von n Kommunikationskanälen X1 bis Xn; Bestimmen von (n-1) binären Zufallszahlen Z1 bis Z(n-1), die jeweils so lang wie T sind; Bilden einer Nachricht S1 durch XOR-Verknüpfen der Nachricht S mit der ersten Zufallszahl Z1; Bilden weiterer Nachrichten Si durch XOR-Verknüpfen jeweils der Zufallszahl Zi mit der Zufallszahl Z(i+1), für alle 1 < i < (n-1); Bilden einer weiteren Nachricht Sn als Zufallszahl Zn; und Versenden jeweils einer Nachricht S(i) über einen der Kommunikationskanäle X(i).

FIG 1

EP 3 439 227 A1

**Beschreibung**

Die Erfindung betrifft die sichere Kommunikation zwischen zwei Teilnehmern. Insbesondere betrifft die Erfindung die sichere Kommunikation ohne Schlüsselaustausch.

Ein Sender möchte einen Klartext über einen Kommunikationskanal an einen Empfänger schicken. Der Kommunikationskanal ist ungesichert, sodass eine dritte Partei die übertragenen Daten abhören kann. Um ein Mithören der Daten zu verhindern, kann der Klartext vor dem Versenden kryptographisch verschlüsselt werden. Verfügt der Empfänger nicht bereits über einen kryptographischen Schlüssel, so kann ein Austauschprotokoll für kryptographische Schlüssel durchgeführt werden. Kryptographische Operationen sind jedoch rechenaufwändig und können vorhandene Ressourcen über einen längeren Zeitraum binden. Außerdem muss für mehr Sicherheit üblicherweise ein komplexeres Verfahren oder das gleiche Verfahren mit längeren Schlüsseln eingesetzt werden. Beide Möglichkeiten steigern den erforderlichen Rechenaufwand substanziell.

Eine der vorliegenden Erfindung zu Grunde liegende Aufgabe besteht in der Bereitstellung einer Technik zur einfachen und sicheren Übermittlung eines Klartexts über eine zumindest teilweise ungesicherte Verbindung. Die Erfindung löst diese Aufgabe mittels der Gegenstände der unabhängigen Ansprüche. Unteransprüche geben bevorzugte Ausführungsformen wieder.

Offenbarung der Erfindung

Nach einem ersten Aspekt der Erfindung umfasst ein Verfahren zum Versenden eines binären Klartexts T Schritte des Bereitstellens von n Kommunikationskanälen X1 bis Xn; des Bestimmens von (n-1) binären Zufallszahlen Z1 bis Z(n-1), die jeweils so lang wie T sind; des Bildens einer Nachricht S1 durch XOR-Verknüpfen der Nachricht S mit der ersten Zufallszahl Z1; des Bildens weiterer Nachrichten Si durch XOR-Verknüpfen jeweils der Zufallszahl Zi mit der Zufallszahl Z(i+1), für alle 1 < i < (n-1); des Bildens einer weiteren Nachricht Sn als Zufallszahl Zn; und des Versendens jeweils einer Nachricht S(i) über einen der Kommunikationskanäle X(i).

Der Erfindung liegt die Erkenntnis zu Grunde, dass ein Angreifer zwar einen Kommunikationskanal zwischen einem Sender und einem Empfänger abhören kann, ein Abhören mehrerer Kommunikationskanäle jedoch beliebig aufwändig werden kann. Der zu übermittelnde Klartext wird bevorzugt derart in mehrere Nachrichten aufgeteilt, dass nur alle Nachrichten zusammen den Klartext ergeben und keine Nachricht einen verwertbaren, zusammenhängenden Teil des Klartexts enthält. Jede Nachricht wird dann über einen eigenen Kommunikationskanal versandt, sodass ein Angreifer alle Kommunikationskanäle anhören muss, um den Klartext rekonstruieren zu können.

Das vorgeschlagene Verfahren kommt ohne ein Austauschprotokoll kryptographischer Schlüssel und ohne aufwändige kryptographische Operationen aus. Der Bestimmungsaufwand ist über die Anzahl der einzelnen Nachrichten konstant, sodass auch eine rechenschwache Vorrichtung das Verfahren leicht realisieren kann.

Jeder Kommunikationskanal kann einer Übertragungsstrecke von einem Sender zu einem Empfänger folgen. Die Übertragungsstrecke kann dabei physisch, also Abfolge von Orten bzw. als Trajektorie, oder logisch, beispielsweise in Form einer Reihe von Netzwerkknoten, über welche eine Nachricht transportiert wird, angegeben werden.

In einer Ausführungsform können einige der Kommunikationskanäle paarweise identisch sein. Anders ausgedrückt können einige Nachrichten über denselben Kommunikationskanal versandt werden, beispielsweise zeitversetzt. Bevorzugt sind aber nicht alle Kommunikationskanäle miteinander identisch, sondern möglichst viele, idealerweise alle, bezüglich ihrer Übertragungsstrecken voneinander verschieden. Dadurch kann verhindert werden, dass ein Angreifer in den Besitz mehrerer Nachrichten kommt, indem er einen Kommunikationskanal an einer Stelle abhört. Je mehr voneinander verschiedene Kommunikationskanäle verwendet werden, desto größer kann ein physischer Aufwand für einen Angreifer sein, sich Zugriff auf alle Kommunikationskanäle zu verschaffen.

Wenigstens einer der Kommunikationskanäle kann auf wenigstens einem Teil seiner Übertragungsstrecke verschlüsselt sein. Wird davon ausgegangen, dass ein Angreifer die verwendete Verschlüsselung nicht brechen kann, so muss er an einer Stelle der Übertragungsstrecke auf die Nachricht zugreifen, an der diese nicht verschlüsselt ist. Die Stellen, an denen er die Kommunikationskanäle abhören kann, können so physisch oder logisch weiter auseinander liegen, sodass der Aufwand für den Angreifer, eine vollständige Reproduktion aller übermittelter Nachrichten zu sammeln, weiter gesteigert sein kann. Das erfolgreiche Rekonstruieren des Klartexts durch den Angreifer kann dadurch sehr unwahrscheinlich gemacht werden.

Der Klartext T kann mehrere Stellen umfassen und die Elemente der XOR-Verknüpfungen können jeweils mittels einer zugeordneten Maske maskiert werden, sodass jede Stelle des Klartexts mit genau einer Stelle einer Zufallszahl XOR-verknüpft wird.

Nach einem zweiten Aspekt der Erfindung umfasst ein Verfahren zum Rekonstruieren eines Klartexts Schritte des Empfangens von Nachrichten S1 bis Sn über n Kommunikationskanäle X1 bis Xn; und des Bestimmens eines Klartexts T durch Bilden einer XOR-Verknüpfung über die Nachrichten S1 bis Sn.

Diese Operation kann auch mittels einer rechenschwachen Verarbeitungseinrichtung in kurzer Zeit durchgeführt werden. Die Reihenfolge, in welche die Nachrichten Si miteinander verknüpft werden, spielt hierbei keine Rolle. Erst wenn alle Nachrichten miteinander verknüpft sind, ergibt sich der Klartext üblicherweise noch keinen verwertbaren, zusammenhängenden Teil des Klartexts.

Nach einem dritten Aspekt umfasst eine Vorrichtung zur Versendung eines binären Klartexts T mehrere Verbindungen zu Kommunikationskanälen X1 bis Xn; und eine Verarbeitungseinrichtung, die dazu eingerichtet ist, ein hierin beschriebenes Verfahren zum Versenden einer Nachricht durchzuführen.

Die Verarbeitungseinrichtung kann insbesondere einen programmierbaren Mikrocomputer oder Mikrocontroller umfassen. Das Verfahren kann in Form eines Computerprogrammprodukts mit Programmcodemitteln zur Ausführung auf der Verarbeitungseinrichtung bereitgestellt sein. Merkmale oder Vorteile des Verfahrens können auf die Vorrichtung übertragen werden und umgekehrt.

In einer besonders bevorzugten Ausführungsform umfasst die Verarbeitungseinrichtung einen Zufallszahlengenerator. Der Zufallszahlengenerator ist bevorzugt physisch aufgebaut oder verwendet eine physische Entropiequelle, die auf einem quantenmechanischen Effekt basiert, beispielsweise auf elektrischem oder thermischem Rauschen oder radioaktivem Zerfall. Mittels der Verarbeitungseinrichtung kann eine Imperfektion eines physischen Messinstruments für den Effekt kompensiert werden. Mittels eines solchen Zufallszahlengenerators können besser verteilte und weniger leicht vorhersagbare Zufallszahlen bereitgestellt werden als mittels eines Pseudo-Zufallszahlengenerators.

Nach einem weiteren Aspekt der Erfindung umfasst eine Vorrichtung zur Rekonstruktion eines binären Klartexts mehrere Verbindungen zu Kommunikationskanälen X1 bis Xn; und

eine Verarbeitungseinrichtung, die dazu eingerichtet ist, ein hierin beschriebenes Verfahren zum Rekonstruieren eines Klartexts durchzuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

Fig. 1    ein System zum sicheren Übermitteln eines Klartexts;

Fig. 2    ein Verfahren zum Versenden eines Klartexts; und

Fig. 3    ein Verfahren zum Rekonstruieren eines versandten Klartexts

darstellt.

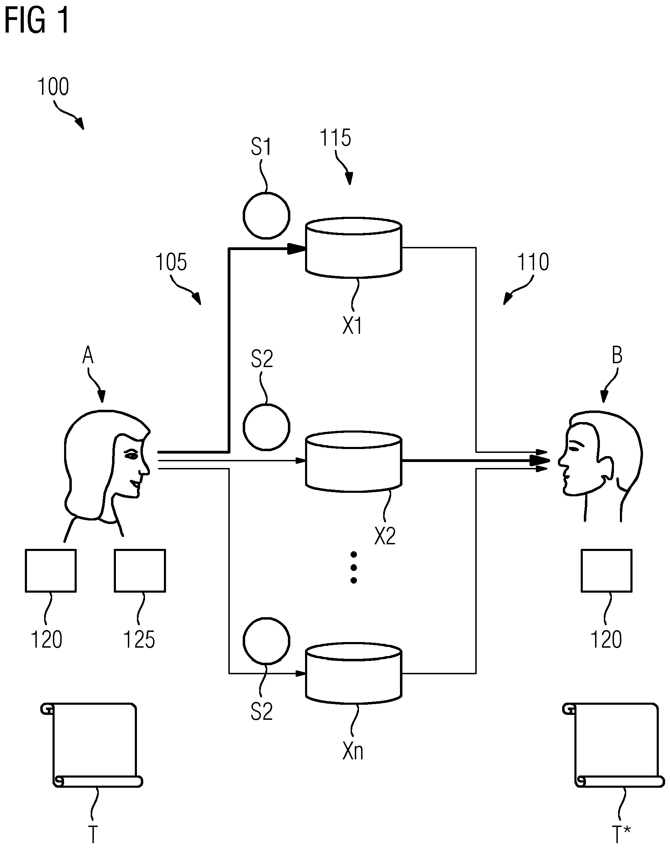

Figur 1 zeigt ein beispielhaftes System 100 zum sicheren Übermitteln eines Klartexts T von einem Sender A (Alice) zu einem Empfänger B (Bob). Es wird davon ausgegangen, dass zwischen A und B mehrere Kommunikationskanäle X bestehen, die alternativ verwendet werden können, und von denen wenigstens einer gegenüber dem Abhören von übertragenen Daten ungeschützt ist. Bevorzugt sind möglichst viele der Kommunikationskanäle X paarweise verschieden voneinander. Die Gleichheit zweier Kommunikationskanälen Xi und Xj kann aufgrund einer physischen oder einer logischen Beförderung von Daten bestimmt werden; andere Metriken sind ebenfalls möglich. Zwei Kommunikationskanäle Xi und Xj können Abschnitte aufweisen, auf denen sie gleich sind und andere, auf denen sie verschieden sind.

In der Darstellung von Figur 1 umfasst jeder Kommunikationskanal X beispielhaft einen ersten, Alice zugewandten Abschnitt 105 und einen zweiten, Bob zugewandten Abschnitt 110, wobei jeder Abschnitt 105, 110 beispielsweise einem Netzwerksegment, einer Datenleitung, einer Übertragungsstrecke zwischen zwei Routern oder eine sonstige Verwaltungseinheit zugeordnet sein kann. In anderen Ausführungsformen kann ein Kommunikationskanal X auch mehr oder weniger als zwei Abschnitte 105, 110 umfassen. Jeder Abschnitt 105, 110 kann drahtlos oder drahtgebunden realisiert sein.

Je verschiedener die Kommunikationskanäle X voneinander sind, desto höher kann die mittels der hierin beschriebenen Technik erzielbare Sicherheit sein, dass ein Angreifer nicht in den Besitz des Klartexts T kommt. Optional kann auf einem Kommunikationskanal X ein Zwischenspeicher 115 bestehen, in welchem zu übertragende Daten für eine vorbestimmte Zeit oder bis zu einer Abfrage durch Bob gespeichert werden können. Ein Zwischenspeicher 105 kann beispielsweise einen E-Mail Server umfassen, der Daten von Alice oder für Bob empfängt und weiterleitet.

Einer oder mehrere Abschnitte 105, 110 eines Kommunikationskanals X kann besonders gesichert sein, insbesondere mittels physischer oder kryptographischer Methoden. Rein beispielhaft umfasst in der Darstellung von Figur 1 der erste Kommunikationskanal X1 einen gesicherten ersten Abschnitt 105 und einen ungesicherten zweiten Abschnitt 110, und der zweite Kommunikationskanal X2 umfasst einen ungesicherten ersten Abschnitt 105 und einen gesicherten zweiten Abschnitt 110. Gesicherte Abschnitte 105, 110 sind in Figur 1 breiten Linien dargestellt, ungesicherte Abschnitte 105, 110 mit schmalen Linien.

Beispielsweise kann der erste Kommunikationskanal X1 einen ersten E-Mail-Dienst umfassen, bei dem Alice ein Konto hat, und der zweite Kommunikationskanal X2 einen zweiten E-Mail-Dienst, bei dem Bob ein Konto hat. Alice und Bob können jeweils mit dem eigenen E-Mail-Dienst gesichert kommunizieren, mit dem fremden E-Mail-Dienst hingegen nur ungesichert.

Daten, die auf einem ungeschützten Abschnitt 105, 110 übertragen werden, können von einem Angreifer (nicht dargestellt) abgehört werden. Der Angreifer kann den Kommunikationskanal X an einer beliebigen Stelle, beispielsweise in einem lokalen Netzwerk von Alice, in einem Weitverkehrsnetzwerk, das eine der Abschnitte 105, 110 umfassen kann, oder in einem lokalen Netzwerk von Bob abhören. Außerdem kann der Angreifer unter Umständen die im Zwischenspeicher 115 abgelegten Daten ausspähen.

In einer Ausführungsform können Alice oder Bob Personen sein, in einer anderen Ausführungsform können Alice und Bob auch jeweils als Vorrichtung ausgebildet sein. Dazu kann Alice oder Bob eine Verarbeitungseinrichtung 120 umfassen. Alice kann zusätzlich einen Zufallszahlengenerator 125 aufweisen, der bevorzugt eine physische Entropiequelle umfasst. Alice oder Bob kann ein vernetztes Kleingerät umfassen, das dem "Internet der Dinge" (engl.: "internet of things", IoT) zugerechnet werden kann.

Die Übermittlung des Klartexts T von Alice zu Bob wird aufgeteilt in ein erstes Verfahren zum Aussenden des Klartexts T durch Alice und ein zweites Verfahren zum Rekonstruieren des Klartexts durch Bob. Durch die Verfahren kann eine sichere Übermittlung durchgeführt werden, die mit extrem geringen Verarbeitungsmitteln auskommt und kein Schlüsselaustauschprotokoll erfordert.

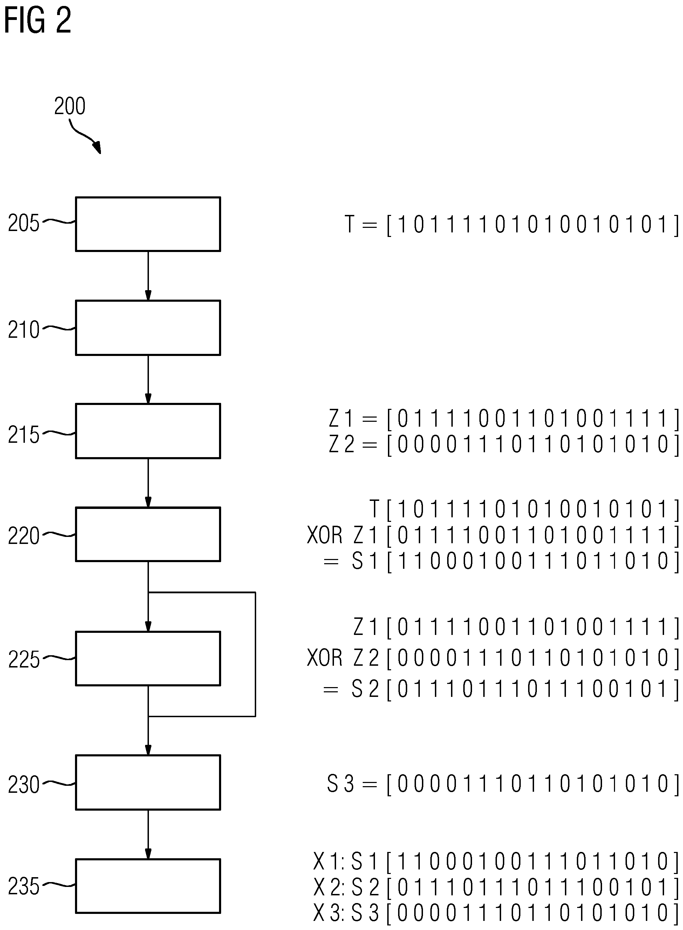

Figur 2 zeigt ein erstes Verfahren 200 zum Aussenden des Klartexts T durch Alice. Im linken Bereich sind symbolische Verarbeitungsschritte des Verfahrens 200 dargestellt, in einem rechten Bereich ist zur leichteren Nachvollziehbarkeit ein zahlenmäßiges Beispiel angegeben.

In einem Schritt 205 kann der Klartext T zur Übermittlung bereitgestellt werden. Danach liegt der Klartext T in binär codierter Form vor und hat eine Länge von k. Im dargestellten Beispiels gilt k = 17.

In einem Schritt 210 können n Kommunikationskanäle X bereitgestellt werden. Im dargestellten Beispiel gilt n = 3. Dabei soll n > 1 gelten. Je größer n ist, desto besser kann der Klartext T während der Übertragung geschützt sein. Der Schritt 210 wird üblicherweise implizit durchgeführt, da Verbindungen zu den Kommunikationskanälen X meist permanent bestehen; ein explizites Bereitstellen eines Kommunikationskanals X kann jedoch beispielsweise bei einem energiesparendem Gerät oder einem kostenpflichtig zu nutzenden Kommunikationskanal X erforderlich sein. Der Schritt 210 kann auch zu einem späteren Zeitpunkt durchgeführt werden.

In einem Schritt 215 werden (n-1) Zufallszahlen Z bereitgestellt, wobei jede Zufallszahl Z mindestens so lang ist wie der Klartext T. Bevorzugt haben alle Zufallszahlen Z genau die Länge des Klartexts T. Die Zufallszahlen Z können bevorzugt nach Art von Pseudozufallszahlen als Zahlenfolge auf der Basis eines möglichst zufälligen Ereignisses, oder mittels eines Zufallszahlengenerators auf der Basis einer physischen Entropiequelle bereitgestellt werden. Anschließend wird der Klartext T in Schritten 220 bis 230 auf der Basis der Zufallszahlen Z in n Nachrichten S zerlegt.

Im Schritt 220 wird eine erste Nachricht S1 als XOR-Verknüpfung des Klartexts T mit der ersten Zufallszahl Z bestimmt. Die XOR-Verknüpfung ist eine bitweise Operation, die auf korrespondierenden Bits (Stellen) der genannten Daten durchgeführt wird. Dabei gilt folgende Wertetabelle:

XOR-Verknüpfung

| Eingang 1 | Eingang 2 | Ausgang |
|-----------|-----------|---------|
| 0 | 0 | 0 |
| 0 | 1 | 1 |
| 1 | 0 | 1 |
| 1 | 1 | 0 |

Die als Schlüssel verwendete Zufallszahl Z1 weist mindestens die gleiche Länge wie der Klartext T auf, seine Elemente sind zufällig. Wird die Zufallszahl Z1 nur einmal verwendet und geheim gehalten, erfüllt der Schritt 220 die Anforderungen an eine Einmalverschlüsselung (engl.: "one time pad", OTP), die kryptographisch als sehr sicher gilt.

In einem Schritt 225 werden für 1 < i < (n-1) weitere Nachrichten Si gebildet, indem jeweils die Zufallszahl Zi mit der Zufallszahl Z(i+1) verknüpft wird. Bestehen nur zwei Kommunikationskanäle X, entfällt dieser Schritt entfallen.

Schließlich wird die letzte verbleibende Zufallszahl Zn in einem Schritt 230 als Nachricht Sn verwendet. Für die Sicherheit der Schritte 225 und 230 gilt das oben Gesagte.

Die gebildeten Nachrichten S1 bis Sn weisen keine erkennbare Ähnlichkeit mit dem Klartext T mehr auf. Sie können in einem Schritt 235 über die Kommunikationskanäle X1 bis Xn an Bob gesandt werden. Bevorzugt ist jedem Kommunikationskanal Xi genau eine Nachricht Si zugeordnet.

In einer Variante des Verfahrens können die Nachrichten Si in den Schritten 220 und 225 auch wie folgt gebildet werden:

$$Si(j) = m(i,0)T(j) + m(i,1)Z1(j) + ... + m(i,n)Zn(j);$$

mit:

i = 1..n; (n ist die Anzahl der Kommunikationskanäle X)
j = 1..k; (k ist die Anzahl der Stellen der Nachricht T) m(1,p) + m(2,p) + ... + m(n,p) =
1, falls (p=0), und
0, sonst;
p = 0..n;
+ := XOR-Verknüpfung

Anders ausgedrückt kann die Nachricht T wieder mit (n-1) Zufallszahlen Z XOR-verknüpft werden, dabei werden aber die Wirkungen der Zufallszahlen Zi auf die Nachricht T jeweils mittels einer Maske m(i) teilweise ausgeblendet, sodass nur ausgewählte Stellen einer Zufallszahl Zi bei jeder XOR-Verknüpfung berücksichtigt werden. Die Masken m bilden praktisch jeweils eine UND-Verknüpfung mit T bzw. Zi und die Ergebnisse dieser UND-Verknüpfungen werden dann miteinander XOR-verknüpft.

(n-1) Masken m können nach dem Vorbild der Zufallszahlen Z zufällig, pseudo-zufällig oder auf beliebige andere Weise gewählt werden, und die letzte Maske m wird dann so gebildet, dass die oben angegebene Bedingung erfüllt ist. Bevorzugt haben die Masken m jeweils genau die Längen der Nachricht T. Wie die Zufallszahlen Z können die Masken m in anderen Ausführungsformen auch länger sein.

Das Rekonstruieren der auf diese Weise gebildeten Nachrichten Si erfolgt unverändert mittels XOR-Verknüpfen aller bestimmten Nachrichten Si. Dass dabei die originale Nachricht T gebildet wird, kann für die oben beschriebene Variante wie folgt bewiesen werden:

$$T^*(j) = X1(j) + X2(j) + ... + Xn(j) =$$
$$m(1,0)\ T(j) + m(1,1)\ Z1(j) + m(1,2)\ Z2(j) ... + m(1,n)\ Zn(j) +$$
$$m(2,0)\ T(j) + m(2,1)\ Z1(j) + m(2,2)\ Z2(j) ... + m(2,n)\ Zn(j) + ... +$$
$$m(n,0)\ T(j) + m(n,1)\ Z1(j) + m(n,2)\ Z2(j) ... + m(n,n)\ Zn(j) =$$

$$[m(1,0) + m(2,0) ... + m(n,0)]\ T(j) +$$
$$[m(1,1) + m(2,1) ... + m(n,1)]\ Z1\ (j) + ... +$$
$$[m(1,n) + m(2,n) ... + m(n,n)]\ Zn\ (j) =$$
$$[1]\ T(j) + [0]\ Z1\ (j) + ... + [0]\ Zn\ (j) = T(j)$$

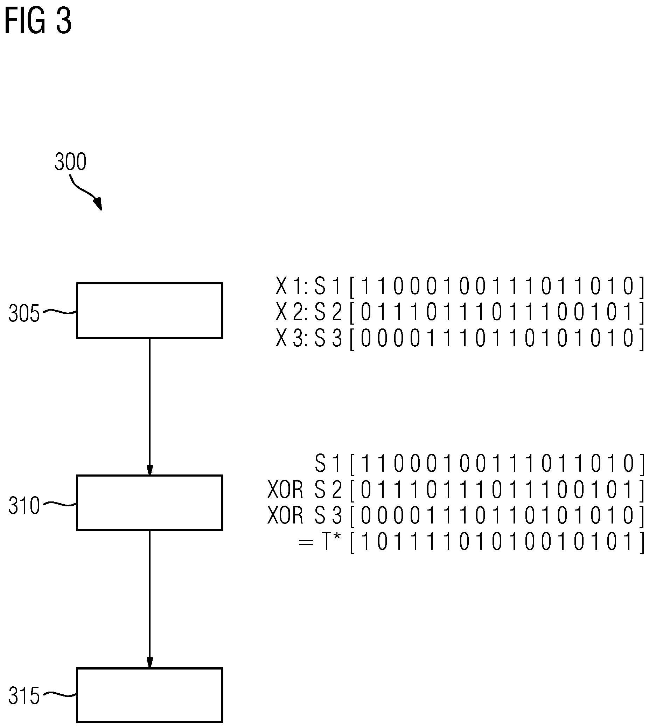

Figur 3 zeigt ein zweites Verfahren 300 zum Rekonstruieren des Klartexts T durch Bob aus den von Alice nach dem Verfahren 200 ausgesandten Nachrichten S1 bis Sn. Dazu können in einem Schritt 305 die Nachrichten S1 bis Sn über die verschiedenen Kommunikationskanäle X1 bis Xn empfangen werden. Anschließend kann in einem Schritt 310 eine XOR-Verknüpfung über die Nachrichten S1 bis Sn durchgeführt werden, was einen Klartext T* ergibt, der genau dann mit dem bei Alice vorliegenden Klartext T identisch ist, wenn alle zusammen gehörenden Nachrichten S1 bis Sn verwendet wurden. Die Reihenfolge der Nachrichten S1 bis Sn spielt bei der Bildung der XOR-Verknüpfung keine Rolle.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren (200) zum Versenden eines binären Klartexts T, wobei das Verfahren (200) folgende Schritte umfasst:

    - Bereitstellen (210) von n Kommunikationskanälen X1 bis Xn;
    - Bestimmen (215) von (n-1) binären Zufallszahlen Z1 bis Z(n-1), die jeweils so lang wie T sind;

- Bilden (220) einer Nachricht S1 durch XOR-Verknüpfen der Nachricht T mit der ersten Zufallszahl Z1;
- Bilden (225) weiterer Nachrichten Si durch XOR-Verknüpfen jeweils der Zufallszahl Zi mit der Zufallszahl Z(i+1), für alle 1 < i < (n-1);
- Bilden (230) einer weiteren Nachricht Sn als Zufallszahl Zn; und
- Versenden (235) jeweils einer Nachricht S(i) über einen der Kommunikationskanäle X(i).

2. Verfahren (200) nach Anspruch 1, wobei die Kommunikationskanäle X jeweils einer Übertragungsstrecke (105, 110) von einem Sender (A) zu einem Empfänger (B) folgen und die Übertragungsstrecken (105, 110) paarweise voneinander verschieden sind.

3. Verfahren (200) nach Anspruch 1 oder 2, wobei wenigstens einer der Kommunikationskanäle X wenigstens auf einem Teil seiner Übertragungsstrecke (105, 110) verschlüsselt ist.

4. Verfahren (200) nach einem der vorangehenden Ansprüche, wobei der Klartext T mehrere Stellen umfasst und die Elemente der XOR-Verknüpfungen jeweils mittels einer zugeordneten Maske maskiert werden, sodass jede Stelle des Klartexts mit genau einer Stelle einer Zufallszahl XOR-verknüpft wird.

5. Verfahren (300) zum Rekonstruieren eines Klartexts (T), wobei das Verfahren (300) folgende Schritte umfasst:

- Empfangen (305) von Nachrichten S1 bis Sn über n Kommunikationskanäle X1 bis Xn; und
- Bestimmen (310) eines Klartexts T durch Bilden (310) einer XOR-Verknüpfung über die Nachrichten S1 bis Sn.

6. Vorrichtung (A) zur Übermittlung eines binären Klartexts T, wobei die Vorrichtung (A) folgendes umfasst:

- Verbindungen zu Kommunikationskanälen X1 bis Xn; und
- eine Verarbeitungseinrichtung (120), die dazu eingerichtet ist, ein Verfahren nach einem der Ansprüche 1 bis 3 durchzuführen.

7. Vorrichtung (A) nach Anspruch 6, ferner umfassend einen Zufallszahlengenerator (125).

8. Vorrichtung (B) zur Rekonstruktion eines binären Klartexts (T), wobei die Vorrichtung (B) folgendes umfasst:

- Verbindungen zu Kommunikationskanälen X1 bis Xn; und
- eine Verarbeitungseinrichtung (120), die dazu eingerichtet ist, ein Verfahren (300) nach Anspruch 5 oder 6 durchzuführen.


**Geänderte Patentansprüche gemäss Regel 137(2) EPÜ.**

1. Verfahren (200) zum Versenden eines binären Klartexts T, der mehrere Stellen umfasst, wobei das Verfahren (200) folgende Schritte umfasst:

- Bereitstellen (210) von n Kommunikationskanälen X1 bis Xn;
- Bestimmen (215) von (n-1) binären Zufallszahlen Z1 bis Z(n-1), die jeweils so lang wie T sind;
- Bilden (220) einer Nachricht S1 durch XOR-Verknüpfen der Nachricht T mit der ersten Zufallszahl Z1;
- Bilden (225) weiterer Nachrichten Si durch XOR-Verknüpfen jeweils der Zufallszahl Zi mit der Zufallszahl Z(i+1), für alle 1 < i < (n-1);
- Bilden (230) einer weiteren Nachricht Sn als Zufallszahl Zn; und
- Versenden (235) jeweils einer Nachricht S(i) über einen der Kommunikationskanäle X(i),

**dadurch gekennzeichnet, dass**

- die XOR-Verknüpfungen jeweils mittels einer zugeordneten zufälligen Maske m maskiert werden, sodass nur diejenigen Stellen XOR-verknüpft werden, für welche die Maske den Wert 1 hat, und es gilt:
- m(1,p) XOR m(2,p) XOR ... XOR m(n,p) = 1, falls (p=0), und 0, sonst; wobei p = 0..n.

2. Verfahren (200) nach Anspruch 1, wobei die Kommunikationskanäle X jeweils einer Übertragungsstrecke (105, 110) von einem Sender (A) zu einem Empfänger (B) folgen und die Übertragungsstrecken (105, 110) paarweise voneinander verschieden sind.

3. Verfahren (200) nach Anspruch 1 oder 2, wobei wenigstens einer der Kommunikationskanäle X wenigstens auf einem Teil seiner Übertragungsstrecke (105, 110) verschlüsselt ist.

4. Verfahren (300) zum Rekonstruieren eines Klartexts (T), der mittels eines Verfahrens nach einem der Ansprüche 1 bis 3 verschlüsselt wurde, wobei das Verfahren (300) folgende Schritte umfasst:

   - Empfangen (305) von Nachrichten S1 bis Sn über n Kommunikationskanäle X1 bis Xn; und
   - Bestimmen (310) eines Klartexts T durch Bilden (310) einer XOR-Verknüpfung über die Nachrichten S1 bis Sn.

5. Vorrichtung (A) zur Übermittlung eines binären Klartexts T, wobei die Vorrichtung (A) folgendes umfasst:

   - Verbindungen zu Kommunikationskanälen X1 bis Xn; und
   - eine Verarbeitungseinrichtung (120), die dazu eingerichtet ist, ein Verfahren nach einem der Ansprüche 1 bis 3 durchzuführen.

6. Vorrichtung (A) nach Anspruch 5, ferner umfassend einen Zufallszahlengenerator (125).

7. Vorrichtung (B) zur Rekonstruktion eines binären Klartexts (T), der mittels eines Verfahrens nach einem der Ansprüche 1 bis 3 verschlüsselt wurde, wobei die Vorrichtung (B) folgendes umfasst:

   - Verbindungen zu Kommunikationskanälen X1 bis Xn; und
   - eine Verarbeitungseinrichtung (120), die dazu eingerichtet ist, ein Verfahren (300) nach Anspruch 4 durchzuführen.

# FIG 1

# FIG 2

200

205

210

215

220

225

230

235

$T = [ 1 0 1 1 1 1 0 1 0 1 0 0 1 0 1 0 1 ]$

$Z 1 = [ 0 1 1 1 1 0 0 1 1 0 1 0 0 1 1 1 1 ]$
$Z 2 = [ 0 0 0 0 1 1 1 0 1 1 0 1 0 1 0 1 0 ]$

$T [ 1 0 1 1 1 1 0 1 0 1 0 0 1 0 1 0 1 ]$
$XOR\ Z 1 [ 0 1 1 1 1 0 0 1 1 0 1 0 0 1 1 1 1 ]$
$= S 1 [ 1 1 0 0 0 1 0 0 1 1 1 0 1 1 0 1 0 ]$

$Z 1 [ 0 1 1 1 1 0 0 1 1 0 1 0 0 1 1 1 1 ]$
$XOR\ Z 2 [ 0 0 0 0 1 1 1 0 1 1 0 1 0 1 0 1 0 ]$
$= S 2 [ 0 1 1 1 0 1 1 1 0 1 1 1 0 0 1 0 1 ]$

$S 3 = [ 0 0 0 0 1 1 1 0 1 1 0 1 0 1 0 1 0 ]$

$X 1 : S 1 [ 1 1 0 0 0 1 0 0 1 1 1 0 1 1 0 1 0 ]$
$X 2 : S 2 [ 0 1 1 1 0 1 1 1 0 1 1 1 0 0 1 0 1 ]$
$X 3 : S 3 [ 0 0 0 0 1 1 1 0 1 1 0 1 0 1 0 1 0 ]$

# FIG 3

300

305

310

315

X 1: S 1 [ 1 1 0 0 0 1 0 0 1 1 1 0 1 1 0 1 0 ]
X 2: S 2 [ 0 1 1 1 0 1 1 1 0 1 1 1 0 0 1 0 1 ]
X 3: S 3 [ 0 0 0 0 1 1 1 0 1 1 0 1 0 1 0 1 0 ]

$\quad$ S 1 [ 1 1 0 0 0 1 0 0 1 1 1 0 1 1 0 1 0 ]
XOR S 2 [ 0 1 1 1 0 1 1 1 0 1 1 1 0 0 1 0 1 ]
XOR S 3 [ 0 0 0 0 1 1 1 0 1 1 0 1 0 1 0 1 0 ]
$\quad$ = T* [ 1 0 1 1 1 1 0 1 0 1 0 0 1 0 1 0 1 ]

Europäisches
Patentamt

European
Patent Office

Office européen
des brevets

**EUROPÄISCHER RECHERCHENBERICHT**

Nummer der Anmeldung

EP 17 18 4167

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/229614 A1 (THOMPSON ANTHONY SCOTT [US]) 13. August 2015 (2015-08-13) * Absätze [0020], [0034], [0056], [0061], [0076], [0077]; Abbildungen 1,6 * | 1-8 | INV. H04L9/06 |
| | ----- | | |
| X | US 2003/149869 A1 (GLEICHAUF PAUL [US]) 7. August 2003 (2003-08-07) * Absätze [0044], [0048], [0053], [0060] - [0062]; Abbildung 5 * | 1-8 | |
| | ----- | | |
| T | US 2002/146119 A1 (LISS ALEXANDER [US]) 10. Oktober 2002 (2002-10-10) * Absätze [0008] - [0037]; Anspruch 1 * | 1-8 | |
| | ----- | | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| München | 26. Januar 2018 | Billet, Olivier |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 4167

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2018

| Im Recherchenbericht angeführtes Patentdokument | Datum der Veröffentlichung | Mitglied(er) der Patentfamilie | Datum der Veröffentlichung |
|---|---|---|---|
| US 2015229614 A1 | 13-08-2015 | US 2015229614 A1<br>US 2017134345 A1 | 13-08-2015<br>11-05-2017 |
| US 2003149869 A1 | 07-08-2003 | AT 337653 T<br>AT 399406 T<br>AU 2003208894 A1<br>CA 2466704 A1<br>CN 1593033 A<br>DE 60307787 T2<br>EP 1470660 A1<br>EP 1732259 A1<br>US 2003149869 A1<br>WO 03067808 A1 | 15-09-2006<br>15-07-2008<br>02-09-2003<br>14-08-2003<br>09-03-2005<br>30-08-2007<br>27-10-2004<br>13-12-2006<br>07-08-2003<br>14-08-2003 |
| US 2002146119 A1 | 10-10-2002 | KEINE | |

EPO FORM P0461

Für nähere Einzelheiten zu diesem Anhang : siehe Amtsblatt des Europäischen Patentamts, Nr.12/82